# EUROPEAN PATENT SPECIFICATION

(11) **EP 4 161 007 B1**
(45) Date of publication and mention of the grant of the patent: **08.04.2026**
(21) Application number: 21813861.8
(22) Date of filing: 04.03.2021
(51) Int. Cl.: H04L 67/30, H04L 43/026, G06F 18/214, G06F 18/241, G06N 3/084, G06N 3/045, G06N 3/088, H04L 47/2441, H04L 47/2483, G06F 40/284, H04L 43/16

(54) **TRAFFIC IDENTIFICATION METHOD AND APPARATUS, AND ELECTRONIC DEVICE AND STORAGE MEDIUM**
VERFAHREN UND VORRICHTUNG ZUR VERKEHRSIDENTIFIZIERUNG SOWIE ELEKTRONISCHE VORRICHTUNG UND SPEICHERMEDIUM
PROCÉDÉ ET APPAREIL D'IDENTIFICATION DE TRAFIC, ET DISPOSITIF ÉLECTRONIQUE ET SUPPORT D'ENREGISTREMENT

(30) Priority: 26.05.2020 CN 202010456450
(43) Date of publication of application: 05.04.2023
(73) Proprietor: ZTE Corporation, Shenzhen, Guangdong 518057 (CN)
(72) Inventor: HE, Hongye, Shenzhen, Guangdong 518057 (CN); YANG, Zhiguo, Shenzhen, Guangdong 518057 (CN)
(74) Representative: Iannone, Carlo Luigi
(86) International application number: PCT/CN2021/079068
(87) International publication number: WO 2021/238324

(56) References cited:
- WO-A1-2018/219198
- CN-A- 107 239 529
- CN-A- 107 360 032
- CN-A- 108 416 284
- CN-A- 109 063 777
- CN-A- 109 299 742

## Description

### TECHNICAL FIELD

The present application relates to the field of communications and, in particular, to a traffic identification method and apparatus, an electronic device and a storage medium.

### BACKGROUND

The development of traffic identification has gone through several important stages. The identification capability of the identification means based on the five-tuple including a source Internet Protocol (IP), a source port, a destination IP, a destination port and a protocol name is very sensitive to the changes of network dynamic IPs and ports, and such an identification means can no longer meet the needs of traffic identification. Deep packet inspection (DPI) is a widely used traffic means. DPI can acquire a traffic matching pattern, a keyword and other message features by parsing a message to identify the traffic. However, DPI depends on the acquisition of plaintext information of the message and thus the DPI has a weak ability to identify encrypted traffic. In the related art, for the identification of encrypted traffic, part of encrypted traffic is identified by manually constructing a data flow feature and obtaining the best classification feature, or fixed types of encrypted traffic are identified by constructing a one-dimensional convolution neural network model. In the process of the identification of encrypted traffic, the practicability and accuracy of traffic identification methods are poor.

Further relevant technologies are also known from CN109299742A, which relates to a method for automatically discovering unknown network flow. The method includes that: the characteristics of the network flow is extracted; the characteristics of the network flow are input into the neural network for processing; the classification result of the network flow outputted by the neural network is obtained; the classification result is inputted into the normalized exponential function for processing; and the classification probability result corresponding to the classification result is obtained; when the classification probability value of each classification is less than the preset threshold value, the network flow is determined to be the network flow with unknown application type.

### SUMMARY

The present application provides a traffic identification method and apparatus, an electronic device and a storage medium.

The features of the traffic identification method, the electronic device, and the computer-readable storage medium according to the present application are defined in the independent claims. Further improvements are provided in the dependent claims.

A traffic identification method is provided. The traffic identification method includes: a probability that a to-be-identified data flow belongs to each preset traffic type among multiple preset traffic types is determined, where the probability that the to-be-identified data flow belongs to each preset traffic type is configured as an attribution probability of each preset traffic type; the attribution probability of each preset traffic type and a preset probability threshold of each preset traffic type are compared; and in a case where a preset traffic type whose attribution probability is greater than or equal to the preset probability threshold does not exist among the multiple preset traffic types, a traffic type of the to-be-identified data flow is identified as an unknown type.

A traffic identification apparatus is further provided. The traffic identification apparatus includes: a determination method, which is configured to determine a probability that a to-be-identified data flow belongs to each preset traffic type among multiple preset traffic types, where the probability that the to-be-identified data flow belongs to each preset traffic type is configured as an attribution probability of each preset traffic type; a comparison module, which is configured to compare the attribution probability of each preset traffic type and a preset probability threshold of each preset traffic type; and an identification module, which is configured to, in a case where a preset traffic type whose attribution probability is greater than or equal to the preset probability threshold does not exist among the multiple preset traffic types, identify a traffic type of the to-be-identified data flow as an unknown type.

An electronic device is further provided. The electronic device includes at least one processor and a memory communicatively connected to the at least one processor, where the memory is configured to store instructions executable by the at least one processor, and the instructions are executed by the at least one processor to enable the at least one processor to perform the preceding traffic identification method.

A computer-readable storage medium is further provided. The computer-readable storage medium is configured to store a computer program, and the computer program, when executed by a processor, implements the traffic identification method.

### BRIEF DESCRIPTION OF DRAWINGS

FIG. 1 is a flowchart of a traffic identification method according to a first embodiment of the present application;
FIG. 2 is a flowchart of an attribution probability calculation method according to the first embodiment of the present application;
FIG. 3 is a diagram illustrating bigram word segmentation according to the first embodiment of the present application;
FIG. 4 is a diagram illustrating an identification model training method according to the first embodiment of the present application;
FIG. 5 is a flowchart of a preset probability threshold calculation method according to a second embodiment of the present application;
FIG. 6 is a structure diagram of a traffic identification apparatus according to a third embodiment of the present application; and
FIG. 7 is a structure diagram of an electronic device according to a fourth embodiment of the present application.

### DETAILED DESCRIPTION

Various embodiments of the present application will be described below in conjunction with the drawings.

A first embodiment of the present application relates to a traffic identification method is provided. A probability that a to-be-identified data flow belongs to each preset traffic type among multiple preset traffic types is determined, where the probability that the to-be-identified data flow belongs to each preset traffic type is configured as an attribution probability of each preset traffic type; the attribution probability of each preset traffic type and a preset probability threshold of each preset traffic type are compared; and in a case where a preset traffic type whose attribution probability is greater than or equal to the preset probability threshold does not exist among the multiple preset traffic types, a traffic type of the to-be-identified data flow is identified as an unknown type. By presetting a preset probability threshold for each preset traffic type and identifying an unknown type of traffic that does not belong to any preset traffic type according to a relationship between an attribution probability and the preset probability threshold after the probability that the to-be-identified data flow belongs to each preset traffic type is acquired, the mistaken identification of the traffic type of the to-be-identified data flow is avoided, thereby improving the accuracy of the traffic identification, and the traffic identification method is enabled to be applied to the identification of traffic types in an open data set, thereby improving the practicability of the traffic identification method.

The traffic identification method of the embodiments is described below.

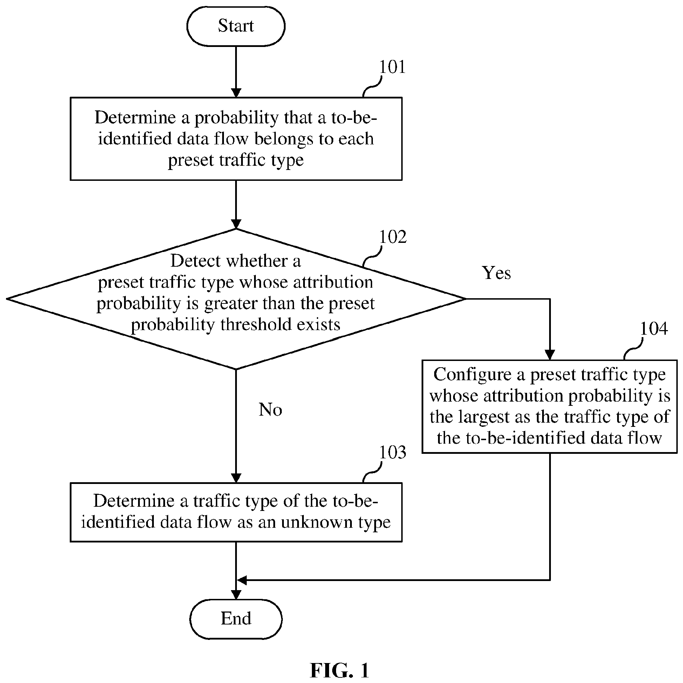

The flow of the traffic identification method in a first embodiment of the present application is shown in FIG. 1, and the traffic identification method includes steps 101, 102, 103 and 104.

In step 101, a probability that a to-be-identified data flow belongs to each preset traffic type is determined.

After a traffic identification task is received, an identification system receives an entire stream of traffic transmitted to the identification system, performs packet capture on inputted traffic through a data packet capture function, stores the captured data packet as a file in a format of pcap, and performs data flow segmentation on the inputted traffic to generate multiple to-be-identified data flows for identification system to identify multiple data flows one by one or synchronously. In the identification process, in conjunction with preset traffic types, the identification system determines the probability that a to-be-identified data flow belongs to each preset traffic type according to traffic information and flow feature of the to-be-identified data flow, where the probability that the to-be-identified data flow belongs to each preset traffic type is recorded as an attribution probability of each preset traffic type.

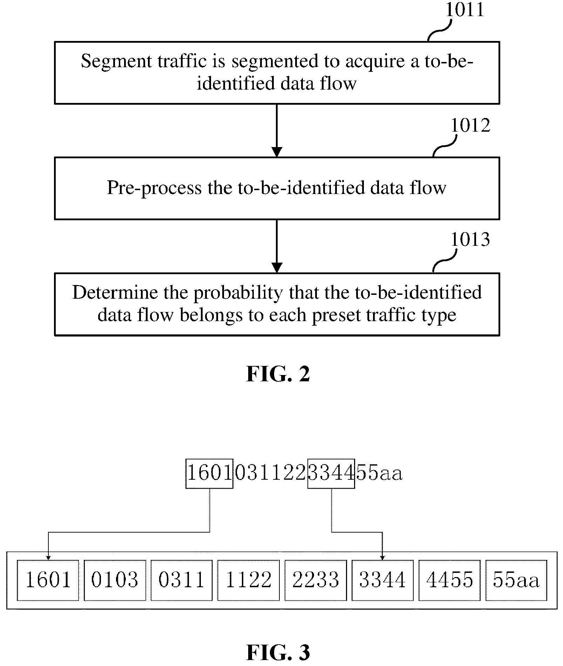

In an example, when the identification system determines the probability that the to-be-identified data flow belongs to each preset traffic type, the identification system acquires payload data of an application layer from an unencrypted data packet of the to-be-identified data flow, performs word segmentation on the payload data to generate a natural language processing (NLP) word list of the to-be-identified data flow, and determines the probability that the to-be-identified data flow belongs to each preset traffic type through a pre-trained identification model according to the NLP word list. The flowchart of a method for the identification system to acquire the probability that the to-be-identified data flow belongs to each preset traffic type is shown in FIG. 2 and includes steps 1011, 1012 and 1013.

In step 1011, traffic is segmented to acquire a to-be-identified data flow.

After the identification system receives an entire stream of traffic, the identification system segments pcap data of input traffic according to the five-tuple including five parameters: a source IP, a source port, a destination IP, a destination port and a protocol name, arranges a message in each data flow in a chronological order to generate at least one to-be-identified data flow, and orderly transmits the acquired to-be-identified data flow to a data input interface of a classification system in the identification system through one input port or transmits multiple to-be-identified data flows to the data input interface of the classification system in the identification system in parallel through multiple ports so that the identification system acquires multiple to-be-identified data flows.

In step 1012, the to-be-identified data flow is pre-processed.

After the to-be-identified data flow is acquired, the identification system acquires payload data of an application layer from an unencrypted data packet of the to-be-identified data flow, performs word segmentation on the payload data, and generates an NLP word list of the to-be-identified data flow. In this manner, the abstract features of the to-be-identified data flow are extracted into the NLP word list for subsequent identification steps.

In an example, when the identification system performs word segmentation on the payload data, the identification system performs word segmentation on the payload data in a bigram method. Since the byte range of a message is "0x00" to "0xff", if a single byte is used as an independent word in the NLP word list, the word library may only contain 256 words, which is quite different from the number of words in natural language. When word segmentation is performed on the payload data in a bigram method, the byte range is changed to "0x0000" to "0xffff", and the number of words that the word library can contain is changed to 65536, which basically meets the requirements of a natural language word library, enabling the obtained phrases to fit the natural language. By performing word segmentation on the payload data in the bigram method, the size of the word library is expanded, and the number of words contained in the word library more fits natural language, thereby improving the accuracy of subsequent traffic type identification results. For example, the diagram illustrating word segmentation where word segmentation is performed on the payload data in the bigram method to obtain NLP word traffic is shown in FIG. 3. The acquired original payload data is 1601031122334455aa, and the NLP word list obtained after word segmentation according to bigram is 1601, 0103, 0311, 1122, 2233, 3344, 4455 and 55aa.

In step 1013, the probability that the to-be-identified data flow belongs to each preset traffic type is determined.

After the to-be-identified data flow is preprocessed to obtain the NLP word list of the to-be-identified data flow, the NLP word list is input into the identification model of the identification system. The identification model determines a feature vector of the to-be-identified data flow according to the input NLP word list and determines the probability that the to-be-identified data flow belongs to each preset traffic type according to the feature vector.

In an example, when the feature vector of the to-be-identified data flow is determined according to the NLP word list, the identification model obtains the feature vector of the to-be-identified data flow through a dynamic word vector algorithm according to the acquired NLP word list and calculates the probability that the to-be-identified data flow belongs to each preset traffic type according to the feature vector through a classification model (for example a softmax multi-classifier) in the identification model. By acquiring the feature vector of the to-be-identified data flow using a dynamic word vector algorithm, based on the characteristic of the dynamic word vector algorithm to adjust itself according to the context of the input NLP word list, the problem of inaccurate abstract feature extraction due to static word vectors that can only achieve one-to-one mapping is solved, thereby improving the directivity of the abstract feature corresponding to the obtained word vector.

By performing word segmentation on the acquired payload data to obtain the NLP word list of the to-be-identified data flow and calculating the probability that the to-be-identified data flow belongs to each preset traffic type through a pre-trained identification model, the traffic information of the to-be-identified data flow is fully utilized, thereby improving the accuracy of the obtained flow feature and improving the accuracy of the obtained attribution probability.

The identification model is trained in the following manner: a dynamic word vector model is provided for pre-training; the dynamic word vector model is pre-trained according to first text data, where the pre-training includes unsupervised training; and a coding network parameter of a pre-trained dynamic word vector model is input into a classification model, supervised training is performed on the classification model according to second text data, and a trained classification model is configured as the identification model.

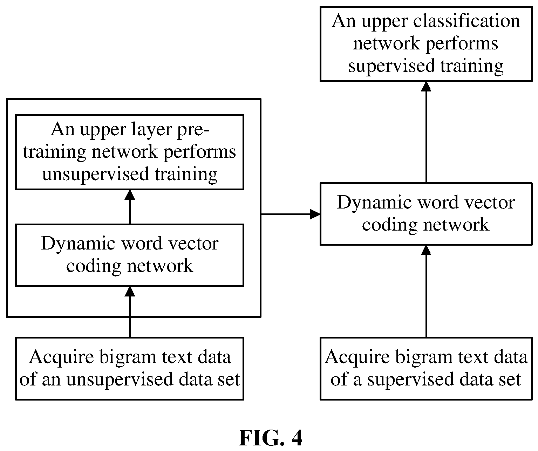

For example, the diagram illustrating the training of the identification model is shown in FIG. 4. The first text data is bigram text data without a traffic type label, and the second text data is bigram text data including a traffic type label. The training of the identification model includes representation learning of a dynamic word vector coding network and classification learning of an upper classification network of the classification model. When the dynamic word vector coding network is used for representation training, bigram text data may be directly extracted from a pre-obtained unsupervised data set, and the representation ability of the provided dynamic word vector model may be trained by unsupervised learning in an upper pre-training network. The classification model in the classification system is divided into an upper classifier network and a lower coding network. When the classification model is trained, a parameter in the lower coding network may be directly copied from the pre-trained dynamic word vector coding network, the pre-trained dynamic word vector coding network is reused, the bigram text data extracted from the supervised learning set is directly called for training, and a parameter of the dynamic word vector coding network in the classification model is fine-tuned according to a classification training result of the upper classifier network until the training is completed. By training the identification model by the mechanism of pre-training and fine-tuning, the dynamic word vector coding network is pre-trained using a large number of unlabeled data, and parameters of the dynamic vector coding network are reused when classification training is performed so that the initialization of the coding network is completed before classification training, thereby improving the fitting speed of classification training and the accuracy of classification. By separating the representation training and classification training in the classification system training process, data flow features are learned using more data, thereby improving the identification abilities of the identification model to identify the feature of the to-be-identified data flow and to identify the traffic type of the to-be-identified data flow, improving the accuracy of the identification model in the feature vector extraction and the calculation of the probability that the to-be-identified data flow belongs to each preset traffic type, and improving the accuracy of traffic identification.

The dynamic word vector model adopted in this embodiment includes, but is not limited to, any of the following dynamic word vector models: Bidirectional Encoder Representations from Transformers (BERT), a lite BERT (ALBERT), and a robustly optimized BERT (RoBERTa).

In step 102, whether a preset traffic type whose attribution probability is greater than the preset probability threshold exists is detected; if the preset traffic type whose attribution probability is greater than the preset probability threshold does not exist, go to step 103; if the preset traffic type whose attribution probability is greater than the preset probability threshold exists, go to step 104. After the attribution probability of each preset traffic type is obtained according to the probability that the segmented to-be-identified data flow belongs to each preset traffic type, the identification system reads the preset probability threshold of each preset traffic type pre-stored by itself, compares the attribution probability of each preset traffic type with the preset probability threshold of each preset traffic type, and detects whether a preset traffic type whose attribution probability is greater than the preset probability threshold exists. If the preset traffic type whose attribution probability is greater than the preset probability threshold does not exist, then go to step 103; if the preset traffic type whose attribution probability is greater than the preset probability threshold exists, go to step 104.

In step 103, a traffic type of the to-be-identified data flow is determined as an unknown type.

After the comparison between the attribution probability of each preset traffic type and the preset probability threshold of each preset traffic type is completed, according to the comparison result, if no preset traffic type whose attribution probability is greater than or equal to the preset probability threshold exists among the multiple preset traffic types, the traffic type of the to-be-identified data flow is identified as an unknown type.

For example, a total of three preset traffic types exist. The probability that the to-be-identified data flow belongs to Type 1 is 0.3, the probability that the to-be-identified data flow belongs to Type 2 is 0.35, the probability that the to-be-identified data flow belongs to Type 3 is 0.28, the preset probability threshold of Type 1 is 0.45, the preset probability threshold of Type 2 is 0.42, and the preset probability threshold of Type is 0.55. No preset traffic type whose attribution probability is greater than the preset probability threshold exists, and the traffic type of the to-be-identified data flow is determined as an unknown type.

In step 104, a preset traffic type whose attribution probability is the largest is configured as the traffic type of the to-be-identified data flow.

After the comparison between the attribution probability of each preset traffic type and the preset probability threshold is completed, if a preset traffic type whose attribution probability is greater than or equal to the preset probability threshold exists among the multiple preset traffic types, the preset traffic type whose attribution probability is the largest is configured as the traffic type of the to-be-identified data flow. By taking the preset traffic type whose attribution probability is the largest as the traffic type of the to-be-identified data flow, the traffic type of the to-be-identified data flow can be identified as accurately as possible.

When the traffic type of the to-be-identified data flow is determined, a traffic type may be randomly selected from the preset traffic types whose attribution probability is greater than the preset probability threshold as the traffic type of the to-be-identified data flow. The selection manner of the traffic type of the to-be-identified data flow is not limited to this embodiment.

This embodiment provides a traffic identification method. After the received traffic is segmented, the NLP word list of the to-be-identified traffic is acquired according to the payload data of the unencrypted data packet in the to-be-identified data flow, the feature vector of the to-be-identified data flow is extracted according to the dynamic word vector algorithm, the probability that the to-be-identified data flow belongs to each preset traffic type calculated by the convolution neural network is configured as the attribution probability of each preset traffic type, and an unknown type of traffic that does not belong to the preset traffic type is identified according to the relationship between the attribution probability of each preset traffic type and the preset probability threshold or the traffic type of the to-be-identified data flow is determined among the traffic types whose attribution probability is greater than the preset threshold, thereby making full use of traffic information and flow features to identify traffic types, achieving the accurate identification of traffic types in open set data traffic, avoiding mistakenly identifying traffic of unknown types as traffic of known types, and improving the accuracy of traffic identification.

A second embodiment of the present application relates to a traffic identification method. The second embodiment is substantially the same as the first embodiment. In this embodiment, when the preset probability threshold of each preset traffic type is obtained, the output probabilities of a training sample obtained through a created one-to-multiple classification network are fitted into a Gaussian distribution, and the preset probability threshold is calculated according to a mean and a standard deviation of the Gaussian distribution to ensure the accuracy of the set probability threshold; after the traffic of an unknown type is obtained, a model in an identification system can be expanded by manual identification to improve the practicability of the identification system.

The flow of the traffic identification method in this embodiment is basically the same as that in the first embodiment. In this embodiment, before the preset probability threshold of each pre-stored preset traffic type is obtained, the preset probability threshold of each preset traffic type may be obtained in the following manner: a one-to-multiple classification network of a preset traffic type is created; an output probability of each of multiple training samples is acquired through the one-to-multiple classification network, where the multiple training samples are data flows belonging to the preset traffic type; output probabilities of the multiple training samples are fitted into a Gaussian distribution; and the preset probability threshold of the preset traffic type is calculated according to a mean and a standard deviation of the Gaussian distribution. By acquiring the output probabilities of multiple training samples of a preset traffic type through the one-to-multiple classification network, fitting the output probabilities into a Gaussian distribution and determining the preset probability threshold according to the mean and standard deviation of the Gaussian distribution, the accuracy of the obtained preset probability threshold is improved.

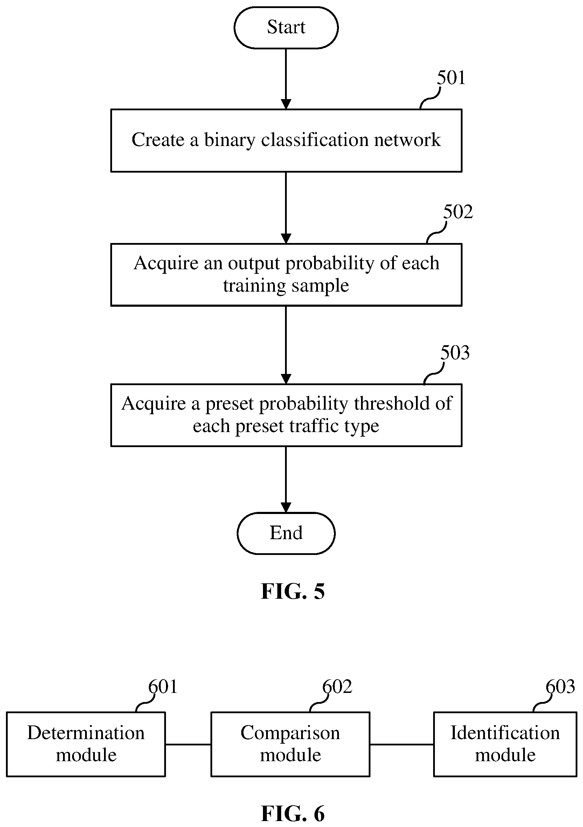

In an example, when the preset probability threshold of each preset traffic type is acquired, the preset probability threshold is characterized by an Open Set Recognition (OSR) rejection value of each preset traffic type calculated by a Deep Open Classification of Text Documents (DOC) algorithm. The acquisition process of the preset probability threshold is shown in FIG. 5, and the process includes steps 501, 502 and 503.

In step 501, a binary classification network is created.

The classification model includes N preset traffic types. A pre-trained classification model, such as a softmax classifier, is modified to N binary classification networks, and multiple training samples are input into each binary classification network. A cross entropy loss of each binary classification network is acquired according to the output probability of each training sample, and the average value of N cross entropy losses is acquired. Back-propagation training is performed using an optimizer according to the average value of the cross entropy losses, and final loss parameter adjustment is performed on each binary classification network to obtain a binary classification network.

In step 502, an output probability of each training sample is acquired.

After the training of the binary classification neural network is completed, multiple training samples of each preset traffic type are input into the trained binary classification neural network, the output probability of each training sample is acquired through the binary classification neural network, and the output probability of each training sample is stored according to the preset traffic type to which each training sample belongs.

In step 503, a preset probability threshold of each preset traffic type is acquired.

After the output probability of each training sample is acquired through the binary classification neural network, the output probabilities of multiple training samples of each preset traffic type are fitted into a Gaussian distribution. A standard deviation σ of each Gaussian distribution is calculated, a mean µ of each Gaussian distribution is acquired, and according to a rejection condition of a DOC algorithm, the difference between the output probability p and the mean µ is greater than a times of the standard deviation σ, that is, "p-µ>>a×σ". In conjunction with the mean µ and standard deviation σ of each Gaussian distribution and the preset hyperparameter multiple a, the OSR rejection value M=µ-a×σ of each preset traffic type is obtained, and the OSR rejection value of each preset traffic type is stored in a storage interval as the preset probability threshold. The OSR rejection value of each preset traffic type calculated according to the rejection condition of the DOC algorithm is configured as the preset probability threshold of each preset traffic type, ensuring the accuracy of the preset probability threshold of each preset traffic type as much as possible.

When the output probabilities of multiple training samples are fitted into a Gaussian distribution, the output probabilities of multiple training samples may be fitted into a Gaussian distribution with a mean of 1. By setting the mean to 1 during the fitting, the calculation formula of the OSR rejection value is changed to M=1-a×σ, and the calculation of the preset probability threshold of each preset traffic type is simplified, thereby improving the calculation efficiency of each preset probability threshold and reducing the burden of the system.

When the OSR rejection value is calculated, a DOC algorithm, an Open Max algorithm or other open data set identification algorithms in the classification field may be used. The used algorithm for calculating the OSR rejection value is not limited to this embodiment.

The acquisition process of the OSR rejection value of each preset traffic type in this embodiment may be updated synchronously with the training of the identification model of the whole identification system. In the training process of the identification model, after the training time of the identification model reaches a preset time interval, a one-to-multiple classification network is re-created according to the latest classification model parameter, and a current OSR rejection value of each preset traffic type is acquired according to the latest output probability of each training sample in the newly created one-to-multiple classification network. The preset probability threshold of each preset traffic type is updated according to the acquired new OSR rejection value. In the training process of the identification model, the OSR rejection value is updated every preset time interval until the training of the identification model is completed, and the OSR rejection value obtained last time is used to characterize the preset probability threshold of the preset traffic type.

By updating the OSR rejection value of each preset traffic type according to the preset update interval, the final OSR rejection value is guaranteed to be the data closest to the actual situation of the trained classification identification mode, and the accuracy of the obtained OSR rejection value is improved, thereby improving the accuracy of each preset probability threshold.

After a data flow of an unknown type is identified, the traffic of unknown types is stored and aggregated separately and transmitted to an offline analysis process. In the offline analysis stage, the identified traffic is labeled with the help of the traffic statistical analysis of technical personnel and expert experience. If the labeled traffic belongs to a preset traffic type, the labeled data flow is added to a supervision training set of the preset traffic type corresponding to the label. If the labeled data flow does not belong to any preset traffic type, the labeled data flow is configured as an independent traffic type, the labeled data flow is imported into a supervised learning set, and the parameters of the classification network are adjusted to expand a new preset traffic type. After the data is added and imported, the classification model is re-trained to expand the identification ability and accuracy of the identification model.

The method of this embodiment may also be combined with the DPI identification technology in the related art. A DPI device is used to identify a to-be-identified split data flow. If the DPI device can complete the identification of the traffic types to which all the to-be-identified data flows belong, an identification result is directly output. If the DPI device cannot complete the identification of the traffic types to which all the to-be-identified data flows belong, to-be-identified data flows which the DPI device cannot identify are transmitted to a trained identification model for identification, thereby ensuring the traffic identification efficiency and improving the accuracy and practicability of the traffic identification.

The division of steps of the above methods is intended for illustration. When implemented, the steps can be combined into one step or some steps may be split and decomposed into multiple steps. As long as the same logical relationship is included, these steps are all within the protection scope of the present application.

A third embodiment of the present application relates to a traffic identification apparatus. As shown in FIG. 6, the traffic identification apparatus includes a determination module 601, a comparison module 602 and an identification module 603.

The determination method 601 is configured to determine a probability that a to-be-identified data flow belongs to each preset traffic type among multiple preset traffic types, where the probability that the to-be-identified data flow belongs to each preset traffic type is configured as an attribution probability of each preset traffic type. The comparison module 602 is configured to compare the attribution probability of each preset traffic type and a preset probability threshold of each preset traffic type. The identification module 603 is configured to, in a case where a preset traffic type whose attribution probability is greater than or equal to the preset probability threshold does not exist among the multiple preset traffic types, identify a traffic type of the to-be-identified data flow as an unknown type.

In an example, the identification module 603 is further configured to, in a case where a preset traffic type whose attribution probability is greater than or equal to the preset probability threshold exists among the multiple preset traffic types, configure a preset traffic type whose attribution probability is the largest as the traffic type of the to-be-identified data flow.

In another example, the preset probability threshold of each preset traffic type is calculated in the following manner: a one-to-multiple classification network of a preset traffic type is created; an output probability of each training sample is acquired through the one-to-multiple classification network, where each training sample is a data flow belonging to the preset traffic type; output probabilities of multiple training samples are fitted into a Gaussian distribution; and the preset probability threshold of the preset traffic type is calculated according to a mean and a standard deviation of the Gaussian distribution.

In another example, the operation where the output probabilities of multiple training samples are fitted into a Gaussian distribution includes: the output probabilities of the multiple training samples are fitted into a Gaussian distribution with a mean of 1.

In an example, the determination module 601 is configured to acquire payload data of an application layer from an unencrypted data packet of the to-be-identified data flow, perform word segmentation on the payload data to generate an NLP word list of the to-be-identified data flow, and determine the probability that the to-be-identified data flow belongs to each preset traffic type through a pre-trained identification model according to the NLP word list.

In another example, the identification model is trained in the following manner: a dynamic word vector model is provided for pre-training; the dynamic word vector model is pre-trained according to first text data, where the pre-training includes unsupervised training; and a coding network parameter of a pre-trained dynamic word vector model is input into a classification model, supervised training is performed on the classification model according to second text data, and a trained classification model is configured as the identification model. In another example, the determination module 601 is configured to perform word segmentation on the payload data in a bigram method.

This embodiment is an apparatus embodiment corresponding to the first embodiment, and this embodiment can be implemented in cooperation with the first embodiment. Related technical details mentioned in the first embodiment are still valid in this embodiment, and details are not repeated here in order to reduce repetition. Accordingly, the related technical details mentioned in this embodiment can also be applied to the first embodiment.

Various modules in this embodiment are all logic modules. In practical application, one logic unit may be one physical unit or a part of one physical unit, and may be implemented by a combination of multiple physical units.

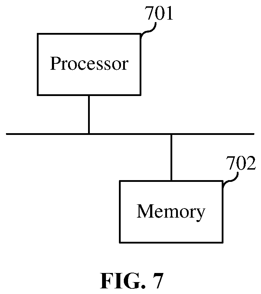

A fourth embodiment of the present application relates to an electronic device. As shown in FIG. 7, the electronic device includes at least one processor 701 and a memory 7021 communicatively connected to the at least one processor 701, where the memory 702 is configured to store instructions executable by the at least one processor 701, and the instructions are executed by the at least one processor 701 to enable the at least one processor 701 to perform the preceding traffic identification method.

The memory 702 and the processor 701 are connected via a bus. The bus may include any number of interconnected buses and bridges, and various circuits including one or more processors 701 and the memory 702 are all connected together via the bus. The bus may also connect various other circuits such as peripheral devices, voltage regulators, power management circuits and the like, and details are not repeated here. The bus interface provides an interface between the bus and a transceiver. The transceiver may be one element, or may be multiple elements such as multiple receivers and a sender, and the transceiver provides a unit for communicating with various other apparatus or devices over a transmission medium. The data processed by the processor 701 is transmitted over a wireless medium through an antenna. In an embodiment, the antenna also receives data and transmits the data to the processor 701.

The processor 701 is responsible for managing the bus and general processing, and may also provide a variety of functions, including timing, peripheral interfaces, voltage regulation, power management and other control functions. The memory 702 may be configured to store the data used by the processor 701 for performing operations.

A fifth embodiment of the present application relates to a computer-readable storage medium storing a computer program. The computer program, when executed by a processor, performs the preceding method embodiments.

All or part of the steps in the preceding method embodiments may be implemented by related hardware as instructed by a program. The preceding program may be stored in a storage medium and contains multiple instructions to enable a device (which may be a single-chip microcomputer, a chip and the like) or a processor to perform all or part of the steps of the method in a plurality of embodiments of the present application. The preceding storage medium includes a USB flash disk, a mobile hard disk, a read-only memory (ROM), a random-access memory (RAM), a magnetic disk, an optical disk or another medium that can store program codes.

## Claims

1. A traffic identification method, comprising:
determining (101) a plurality of probabilities that a to-be-identified data flow belongs to a plurality of preset traffic types, wherein a probability that the to-be-identified data flow belongs to a preset traffic type among the plurality of preset traffic types is configured as an attribution probability of the preset traffic type;
comparing the attribution probability of each preset traffic type and a preset probability threshold of each preset traffic type; and
in a case where a preset traffic type whose attribution probability is greater than or equal to the preset probability threshold does not exist among the plurality of preset traffic types, identifying a traffic type of the to-be-identified data flow as an unknown type;
**characterized in that** the determining (101) the plurality of probabilities that the to-be-identified data flow belongs to the plurality of preset traffic types comprises:
acquiring payload data of an application layer from an unencrypted data packet of the to-be-identified data flow;
performing word segmentation on the payload data to generate a natural language processing, NLP, word list of the to-be-identified data flow; and
determining the plurality of probabilities that the to-be-identified data flow belongs to the plurality of preset traffic types through a pre-trained identification model according to the NLP word list.

2. The method of claim 1, after the comparing the attribution probability of each preset traffic type and the preset probability threshold of each preset traffic type, further comprising:
in a case where a preset traffic type whose attribution probability is greater than or equal to the preset probability threshold exists among the plurality of preset traffic types, configuring a preset traffic type whose attribution probability is the largest as the traffic type of the to-be-identified data flow.

3. The method of claim 1, wherein the preset probability threshold of each preset traffic type is calculated in the following manner:
creating a one-to-multiple classification network of each preset traffic type;
acquiring an output probability of each training sample of a plurality of training samples through the one-to-multiple classification network, wherein the plurality of training samples are data flows belonging to each preset traffic type;
fitting output probabilities of the plurality of training samples into a Gaussian distribution; and
calculating the preset probability threshold of each preset traffic type according to a mean and a standard deviation of the Gaussian distribution.

4. The method of claim 3, wherein the fitting the output probabilities of the plurality of training samples into the Gaussian distribution comprises:
fitting the output probabilities of the plurality of training samples into a Gaussian distribution with a mean of 1.

5. The method of claim 1, wherein the identification model is trained in the following manner:
providing a dynamic word vector model for pre-training;
pre-training the dynamic word vector model according to first text data, wherein the pre-training comprises unsupervised training; and
inputting a coding network parameter of the pre-trained dynamic word vector model into a classification model, performing supervised training on the classification model according to second text data, and configuring the trained classification model as the identification model.

6. The method of claim 1, wherein performing word segmentation on the payload data comprises:
performing word segmentation on the payload data in a bigram method.

7. An electronic device, comprising at least one processor and a memory communicatively connected to the at least one processor, wherein the memory is configured to store instructions executable by the at least one processor, and the instructions are executed by the at least one processor to enable the at least one processor to perform the traffic identification method of any one of claims 1 to 6.

8. A computer-readable storage medium storing a computer program, wherein the computer program, when executed by a processor, implements the traffic identification method of any one of claims 1 to 6.

## Patentansprüche

1. Verfahren zur Verkehrsidentifizierung, umfassend:
Bestimmen (101) einer Vielzahl von Wahrscheinlichkeiten, dass ein zu identifizierender Datenfluss zu einer Vielzahl von voreingestellten Verkehrsarten gehört, wobei eine Wahrscheinlichkeit, dass der zu identifizierende Datenfluss zu einer voreingestellten Verkehrsart unter der Vielzahl von voreingestellten Verkehrsarten gehört, als eine Zuordnungswahrscheinlichkeit der voreingestellten Verkehrsart konfiguriert ist;
Vergleichen der Zurechnungswahrscheinlichkeit jeder voreingestellten Verkehrsart und eines voreingestellten Wahrscheinlichkeitsschwellenwertes jeder voreingestellten Verkehrsart; und
in einem Fall, in dem eine voreingestellte Verkehrsart, deren Zuordnungswahrscheinlichkeit größer oder gleich dem voreingestellten Wahrscheinlichkeitsschwellenwert ist, nicht unter der Vielzahl der voreingestellten Verkehrsarten existiert, Identifizierung einer Verkehrsart des zu identifizierenden Datenflusses als eine unbekannte Art;
**dadurch gekennzeichnet, dass**
das Bestimmen (101) der Mehrzahl von Wahrscheinlichkeiten, dass der zu identifizierende Datenfluss zu der Mehrzahl von voreingestellten Verkehrsarten gehört, umfasst:
Erfassen von Nutzdaten einer Anwendungsschicht aus einem unverschlüsselten Datenpaket des zu identifizierenden Datenflusses;
Durchführung einer Wortsegmentierung an den Nutzdaten, um eine NLP-Wortliste des zu identifizierenden Datenflusses zu erzeugen; und
Bestimmen der Vielzahl von Wahrscheinlichkeiten, dass der zu identifizierende Datenfluss zu der Vielzahl von voreingestellten Verkehrsarten gehört, durch ein vorab trainiertes Identifikationsmodell gemäß der NLP-Wortliste.

2. Verfahren nach Anspruch 1, das nach dem Vergleich der Zurechnungswahrscheinlichkeit jeder voreingestellten Verkehrsart und des voreingestellten Wahrscheinlichkeitsschwellenwerts jeder voreingestellten Verkehrsart weiterhin umfasst:
in einem Fall, in dem eine voreingestellte Verkehrsart, deren Zurechnungswahrscheinlichkeit größer oder gleich dem voreingestellten Wahrscheinlichkeitsschwellenwert ist, unter der Vielzahl von voreingestellten Verkehrsarten existiert, Konfigurieren einer voreingestellten Verkehrsart, deren Zurechnungswahrscheinlichkeit die größte ist, als die Verkehrsart des zu identifizierenden Datenflusses.

3. Verfahren nach Anspruch 1, wobei der voreingestellte Wahrscheinlichkeitsschwellenwert jeder voreingestellten Verkehrsart auf folgende Weise berechnet wird:
Schaffung eines Eins-zu-Mehrfach-Klassifizierungsnetzes für jede voreingestellte Verkehrsart;
Erfassen einer Ausgabewahrscheinlichkeit jeder Trainingsstichprobe einer Vielzahl von Trainingsstichproben durch das Eins-zu-Mehrfach-Klassifizierungsnetzwerk, wobei die Vielzahl von Trainingsstichproben Datenflüsse sind, die zu jedem voreingestellten Verkehrstyp gehören;
Anpassen der Ausgabewahrscheinlichkeiten der Vielzahl von Trainingsproben an eine Gaußsche Verteilung; und
Berechnung der voreingestellten Wahrscheinlichkeitsschwelle jeder voreingestellten Verkehrsart gemäß einem Mittelwert und einer Standardabweichung der Gauß-Verteilung.

4. Verfahren nach Anspruch 3, wobei das Anpassen der Ausgabewahrscheinlichkeiten der Vielzahl von Trainingsproben an die Gaußsche Verteilung umfasst:
Anpassen der Ausgabewahrscheinlichkeiten der Vielzahl von Trainingsproben an eine Gauß-Verteilung mit einem Mittelwert von 1.

5. Verfahren nach Anspruch 1, wobei das Identifizierungsmodell auf folgende Weise trainiert wird:
Bereitstellung eines dynamischen Wortvektormodells für das Vortraining;
Vortraining des dynamischen Wortvektormodells entsprechend den ersten Textdaten, wobei das Vortraining ein unüberwachtes Training umfasst; und
Eingeben eines Kodierungsnetzparameters des zuvor trainierten dynamischen Wortvektormodells in ein Klassifizierungsmodell, Durchführen eines überwachten Trainings des Klassifizierungsmodells anhand von zweiten Textdaten und Konfigurieren des trainierten Klassifizierungsmodells als das Identifizierungsmodell.

6. Verfahren nach Anspruch 1, wobei die Durchführung einer Wortsegmentierung an den Nutzdaten umfasst:
Durchführung einer Wortsegmentierung an den Nutzdaten in einer Bigram-Methode.

7. Elektronische Vorrichtung mit mindestens einem Prozessor und einem Speicher, der mit dem mindestens einen Prozessor kommunikativ verbunden ist, wobei der Speicher so konfiguriert ist, dass er Befehle speichert, die von dem mindestens einen Prozessor ausgeführt werden können, und die Befehle von dem mindestens einen Prozessor ausgeführt werden, um den mindestens einen Prozessor in die Lage zu versetzen, das Verkehrsidentifikationsverfahren nach einem der Ansprüche 1 bis 6 durchzuführen.

8. Computerlesbares Speichermedium, das ein Computerprogramm speichert, wobei das Computerprogramm, wenn es von einem Prozessor ausgeführt wird, das Verfahren zur Verkehrsidentifizierung nach einem der Ansprüche 1 bis 6 implementiert.

## Revendications

1. Procédé d'identification de trafic, comprenant:
déterminer (101) plusieurs probabilités qu'un flux de données à identifier appartienne à plusieurs types de trafic prédéfinis, la probabilité que le flux de données à identifier appartienne à un type de trafic prédéfini parmi plusieurs types de trafic prédéfinis étant configurée comme une probabilité d'attribution du type de trafic prédéfini;
comparer la probabilité d'attribution de chaque type de trafic prédéfini et un seuil de probabilité prédéfini pour chaque type de trafic prédéfini; et
dans le cas où un type de trafic prédéfini dont la probabilité d'attribution est supérieure ou égale au seuil de probabilité prédéfini n'existe pas parmi la pluralité de types de trafic prédéfinis, identifier un type de trafic du flux de données à identifier comme étant un type inconnu;
**caractérisé en ce que**
la détermination (101) de la pluralité de probabilités que le flux de données à identifier appartienne à la pluralité de types de trafic prédéfinis comprend:
l'acquisition de données utiles d'une couche d'application à partir d'un paquet de données non cryptées du flux de données à identifier;
effectuer une segmentation des mots sur les données utiles pour générer une liste de mots de traitement du langage naturel, NLP, du flux de données à identifier; et
déterminer la pluralité de probabilités que le flux de données à identifier appartienne à la pluralité de types de trafic prédéfinis par le biais d'un modèle d'identification pré-entraîné en fonction de la liste de mots NLP.

2. Procédé de la revendication 1, après la comparaison de la probabilité d'attribution de chaque type de trafic prédéfini et du seuil de probabilité prédéfini de chaque type de trafic prédéfini, comprend en outre:
dans le cas où un type de trafic prédéfini dont la probabilité d'attribution est supérieure ou égale au seuil de probabilité prédéfini existe parmi la pluralité de types de trafic prédéfinis, configurer un type de trafic prédéfini dont la probabilité d'attribution est la plus grande comme type de trafic du flux de données à identifier.

3. Procédé de la revendication 1, dans lequel le seuil de probabilité prédéfini de chaque type de trafic prédéfini est calculé de la manière suivante:
la création d'un réseau de classification de un à plusieurs pour chaque type de trafic prédéfini;
l'acquisition d'une probabilité de sortie pour chaque échantillon d'entraînement d'une pluralité d'échantillons d'entraînement par l'intermédiaire du réseau de classification un à multiple, la pluralité d'échantillons d'entraînement étant des flux de données appartenant à chaque type de trafic prédéfini;
adapter les probabilités de sortie de la pluralité d'échantillons d'apprentissage à une distribution gaussienne; et
calculer le seuil de probabilité prédéfini de chaque type de trafic prédéfini en fonction d'une moyenne et d'un écart type de la distribution gaussienne.

4. Procédé de la revendication 3, dans lequel l'ajustement des probabilités de sortie de la pluralité d'échantillons d'entraînement dans la distribution gaussienne comprend:
adapter les probabilités de sortie de la pluralité d'échantillons d'apprentissage à une distribution gaussienne avec une moyenne de 1.

5. Procédé de la revendication 1, dans lequel le modèle d'identification est entraîné de la manière suivante:
fournir un modèle dynamique de vecteur de mots pour le préapprentissage;
préapprentissage du modèle dynamique de vecteur de mots en fonction des premières données textuelles, le préapprentissage comprenant un apprentissage non supervisé; et
introduire un paramètre de réseau de codage du modèle de vecteur de mots dynamique préformé dans un modèle de classification, effectuer une formation supervisée sur le modèle de classification en fonction des secondes données textuelles et configurer le modèle de classification formé en tant que modèle d'identification.

6. Procédé de la revendication 1, dans lequel la segmentation des mots sur les données de la charge utile comprend:
effectuer une segmentation des mots sur les données utiles selon une méthode de bigramme.

7. Dispositif électronique comprenant au moins un processeur et une mémoire connectée de manière communicative à l'au moins un processeur, dans lequel la mémoire est configurée pour stocker des instructions exécutables par l'au moins un processeur, et les instructions sont exécutées par l'au moins un processeur pour permettre à l'au moins un processeur d'exécuter la méthode d'identification du trafic de l'une des revendications 1 à 6.

8. Support de stockage lisible par ordinateur stockant un programme informatique, dans lequel le programme informatique, lorsqu'il est exécuté par un processeur, met en oeuvre le procédé d'identification du trafic de l'une quelconque des revendications 1 à 6.
